(19)

Europäisches
Patentamt
European
Patent Office
Office européen
des brevets

(11) **EP 2 463 241 A1**

(12) **EUROPEAN PATENT APPLICATION**
published in accordance with Art. 153(4) EPC

(43) Date of publication:
**13.06.2012 Bulletin 2012/24**

(21) Application number: **10806409.8**

(22) Date of filing: **02.08.2010**

(51) Int Cl.:
*C02F 1/44* (2006.01)     *B01D 29/01* (2006.01)
*B01D 29/11* (2006.01)     *B01D 29/50* (2006.01)
*B01D 29/66* (2006.01)     *B01D 61/04* (2006.01)
*B01D 61/08* (2006.01)     *B01D 61/18* (2006.01)
*B01D 61/58* (2006.01)     *B01D 71/36* (2006.01)

(86) International application number:
**PCT/JP2010/063003**

(87) International publication number:
**WO 2011/016410 (10.02.2011 Gazette 2011/06)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **06.08.2009  JP 2009183582
30.11.2009  JP 2009270926**

(71) Applicant: **Sumitomo Electric Industries, Ltd.
Chuo-ku
Osaka-shi
Osaka 541-0041 (JP)**

(72) Inventors:
• **KASHIHARA, Hideki
Osaka-shi
Osaka 554-0024 (JP)**

• **NAKAI, Ryusuke
Osaka-shi
Osaka 554-0024 (JP)**
• **HAHAKURA, Shuji
Osaka-shi
Osaka 554-0024 (JP)**
• **YAHAGI, Satoshi
Osaka-shi
Osaka 554-0024 (JP)**

(74) Representative: **Setna, Rohan P.
Boult Wade Tennant
Verulam Gardens
70 Gray's Inn Road
London WC1X 8BT (GB)**

(54) **WATER TREATMENT DEVICE AND WATER TREATMENT METHOD**

(57)     There is provided a water treatment apparatus, including: first membrane filtration means in which a filtration membrane having an average pore diameter of 1 $\mu$m or more is used; second membrane filtration means for treating water filtered by the first membrane filtration means, by using a microfiltration membrane or ultrafiltration membrane; and reverse osmosis membrane filtration means for treating water filtered by the second membrane filtration means. In particular, there is provided a water treatment apparatus, wherein a hydrophobic polymer membrane that is not subjected to hydrophilicizing processing is used as the filtration membrane having an average pore diameter of 1 $\mu$m or more. There is also provided a water treatment method that can be implemented by these water treatment apparatuses.

FIG.1

EP 2 463 241 A1

## Description

TECHNICAL FIELD

The present invention relates to a water treatment apparatus and a water treatment method in which a reverse osmosis membrane is used. More specifically, the present invention relates to a water treatment apparatus having water treatment means by a reverse osmosis membrane and suspended substance removal means serving as pretreatment of the water treatment means, and to a water treatment method that can be implemented by using the water treatment apparatus.

BACKGROUND ART

A reverse osmosis (RO) membrane is a semipermeable membrane including ultrafine pores each having a diameter of approximately 0.1 to 0.5 nm. By bringing raw water in which impurities such as salt are dissolved into contact with one side of this reverse osmosis membrane and bringing pure water into contact with the other side, osmotic pressure is generated and the pure water permeates the reverse osmosis membrane to the raw water side. When a pressure exceeding the osmotic pressure is applied to the raw water side, however, water molecules in the raw water selectively pass through the reverse osmosis membrane to the pure water side and the pure water from which the impurities such as salt are removed can be obtained. Thus, a water treatment system in which the reverse osmosis membrane is used as means for removing the impurities such as salt from the raw water has been employed and widely applied to desalination treatment such as seawater desalination as well as other recycling of groundwater, discharged water and water.

In many cases, the raw water of the water treatment system in which the reverse osmosis membrane is used includes a suspended substance formed of coarse particles. Thus, in order to prevent contamination of the reverse osmosis membrane caused by the suspended substance, pretreatment means for removing the suspended substance from the raw water is typically provided before treatment means by the reverse osmosis membrane. This pretreatment means includes sand filtration, filtration by using a membrane having pores larger than the pores of the reverse osmosis membrane, for example, microfiltration (MF) or ultrafiltration (UF) or a combination thereof, and the like.

Sand filtration herein refers to a method for removing a suspended substance by guiding raw water to a filter bed that is provided with a filtering material formed of layers of sand (Anthracite, silica sand and the like) and support gravel, and passing the raw water through the filtering material. Microfiltration refers to a method for removing a suspended substance by passing raw water through a microfiltration membrane including pores each having a diameter of approximately 100 nm (0.1 $\mu$m) or

more and less than 1000 nm (1 $\mu$m). Ultrafiltration refers to a method for removing a suspended substance by passing raw water through an ultrafiltration membrane including pores each having a diameter of approximately 1 to 100 nm.

Specifically, the water treatment system in which the reverse osmosis membrane is used and the pretreatment means is provided can include a system of filtering, by the reverse osmosis membrane, water pretreated by one or two stages or more of sand filtration (referred to as reverse osmosis membrane filtration), a system of filtering, by the reverse osmosis membrane, water pretreated by microfiltration or ultrafiltration, and further, a method obtained by combining the aforementioned pretreatment methods, for example, a system of filtering, by the reverse osmosis membrane, water pretreated by microfiltration or ultrafiltration after sand filtration (Non-Patent Literature 1), and the like.

CITATION LIST

NON PATENT LITERATURE

NPL 1: Fukuoka District Waterworks Agency, "Mechanism of Desalination," [online], [searched on July 17, 2009], Internet <URL: http://www.f suiki.or.jp/ seawater/facilities/mechanism.php>

SUMMARY OF INVENTION

TECHNICAL PROBLEM

The above sand filtration, however, has problems such as the need for large installation area because the filter bed is used, and the need for high installation cost because large-scale engineering works are required for installation. In addition, in the sand filtration, only particles in the suspended substance each having a diameter of approximately 1 $\mu$m or more can be removed, and smaller particles cannot be removed. Thus, a flocculant must be added to sufficiently remove the suspended substance, which leads to an increase in treatment cost.

On the other hand, in the pretreatment by microfiltration or ultrafiltration, small particles can be removed and the suspended substance can be sufficiently removed. There is, however, a problem of low flow rate (flux) per unit membrane area. Accordingly, the membrane area must be increased to obtain large amount of treatment. As a result, an apparatus (module) that performs microfiltration or ultrafiltration must be increased in size or the number of the apparatus must be increased, which causes a problem of an increase in installation cost.

In seawater, there is approximately 1 to several ppm of an adhesive substance called TEP (transparent exopolymer particles), which is secreted outside a cell by plankton and microbes. TEP includes saccharide as the main ingredient and are deformable particles each having a particle size of approximately 1 to 200 $\mu$m. Since organic particles such as TEP deform, the organic particles are not sufficiently removed by sand filtration. In addition, when the organic particles are directly filtered by the microfiltration membrane or ultrafiltration membrane, the organic particles adhere to the membrane surface and spread out, which causes fouling (clogging) of the microfiltration membrane or ultrafiltration membrane.

The present invention has been made to solve the above-described problems of the conventional art. In other words, an object of the present invention is to provide a water treatment apparatus and a water treatment method in which a reverse osmosis membrane is used, wherein large installation area is not required and the treatment flow rate (flux) per unit membrane area is high. Conversely, the object of the present invention is to provide a water treatment apparatus and a water treatment method, wherein the same amount of treatment can be achieved in smaller facilities, and thus, the installation cost can be reduced. Further, the object of the present invention is to provide a water treatment apparatus and a water treatment method, wherein a suspended substance and organic particles such as TEP can be sufficiently removed without the need for adding a flocculant.

SOLUTION TO PROBLEM

As a result of a study to solve the above problems, the inventors of the present invention have found that by using a filtration membrane (hereinafter referred to as an LF membrane) having an average pore diameter of 1 $\mu$m or more to perform pretreatment as the former stage of microfiltration (hereinafter referred to as "MF") or ultrafiltration (hereinafter referred to as "UF") in a water treatment apparatus (system) for filtering, by means of a reverse osmosis membrane, water pretreated by MF or UF, large installation area becomes unnecessary, large amount of treatment can be obtained with small facilities, and a suspended substance and organic particles such as TEP can be sufficiently removed by the pretreatment without the need for adding a flocculant. As a result, the inventors of the present invention have accomplished the present invention.

In other words, the above objects are achieved by a water treatment apparatus (claim 1), comprising: first membrane filtration means in which a filtration membrane having an average pore diameter of 1 $\mu$m or more is used; second membrane filtration means for treating water filtered by the first membrane filtration means, by using a microfiltration membrane (hereinafter referred to as "MF membrane") or ultrafiltration membrane (hereinafter referred to as "UF membrane"); and reverse osmosis membrane filtration means for treating water filtered by the second membrane filtration means.

In this water treatment apparatus, raw water (liquid to be treated) is first supplied to the first membrane filtration means and passes through the LF membrane. The liquid treated by the first membrane filtration means passes through the second membrane filtration means in which the MF membrane or UF membrane is used. The liquid treated by the second membrane filtration means is further supplied to the reverse osmosis membrane filtration means. In the first membrane filtration means, the LF membrane removes coarse particles having a size equal to or larger than the size corresponding to the average pore diameter of the LF membrane from the raw water, and also captures organic particles such as TEP. As a result, a suspended substance and the organic particles such as TEP in the raw water are reduced. Furthermore, when the liquid passes through the MF membrane or UF membrane, fine particles in the suspended substance and the organic particles such as TEP are removed. The suspended substance and the organic particles such as TEP are sufficiently removed before the liquid is supplied to the reverse osmosis membrane filtration means.

Since the LF membrane has an average pore diameter of 1 $\mu$m or more, the flow rate (flux) per unit membrane area can be increased as compared with that of the MF membrane or UF membrane. Conversely, a desired amount of treatment can be obtained with smaller facilities.

Furthermore, since the LF membrane removes the coarse particles of the suspended substance in the liquid to be treated and efficiently captures the organic particles such as TEP, clogging of the MF membrane or UF membrane serving as the subsequent stage is suppressed.

The average pore diameter of the filtration membrane such as the LF membrane herein refers to the pore diameter determined by the bubble point method (airflow method). Specifically, this pore diameter refers to diameter d ($\mu$m) indicated by the following expression, assuming that P (Pa) represents an IPA bubble point value (pressure) measured based on ASTM F316 by using isopropyl alcohol, y represents the surface tension (dynes/cm) of the liquid, and B represents the capillary constant. It is noted that the same is also applied to the average pore diameter of the MF membrane, the UF membrane and the like.

$$d=4B\gamma/P$$

The smaller the average pore diameter of the LF membrane is, the smaller particles can be removed, and the rate of removing the suspended substance and the organic particles such as TEP in the pretreatment is enhanced. On the other hand, the smaller the average pore diameter of the LF membrane is, the smaller the flow rate (flux) per unit membrane area is. Accordingly, the optimum pore diameter is selected in consideration of the flow rate (flux) per unit membrane area as well as the desired rate of removing the suspended substance and the organic particles such as TEP.

In addition, the first membrane filtration means in which the LF membrane is used does not require large installation area, and the installation area can be significantly decreased as compared with the installation area in the case of sand filtration. In particular, by using, as the first membrane filtration means, a hollow fiber membrane module formed of the LF membrane, the installation area can be further decreased. In addition, the facilities cost for installation can be significantly lowered as compared with the facilities cost in the case of sand filtration.

In other words, the following effects are achieved according to this method:

> 1) The flow rate (flux) per unit membrane area can be increased.
> 2) Large installation area is not required.
> 3) By the treatment by using the MF membrane or UF membrane, even fine particles in the raw water are removed and the suspended substance is sufficiently removed. Therefore, addition of the flocculant is not required. Accordingly, the running cost can also be lowered.
> 4) As compared with the case where the pretreatment of the reverse osmosis membrane filtration is performed by using only the MF membrane or UF membrane, the total area of the filtration membrane required to achieve the same amount of treatment can be reduced. As a result, the overall apparatus can be made compact, and the facilities cost and the installation area can be reduced.

In other words, the MF membrane or UF membrane has a problem of low flow rate (flux) per unit membrane area and the membrane area must be increased to obtain the same amount of treatment. By performing the treatment by the LF membrane before MF or UF, the filtration load of the MF membrane or UF membrane can be reduced and the area of the MF membrane or UF membrane required to obtain the same amount of treatment can be decreased because the LF membrane removes relatively coarse particles in the suspended substance and the content of the organic particles such as TEP is also reduced. Since the area of the LF membrane required to obtain this effect is normally much smaller than the overall area of the MF membrane or UF membrane, the overall area of the membrane can be reduced even in consideration of the need for the LF membrane. As a result, the size of the apparatus (module) and the number of the apparatus can be decreased and the installation cost can be reduced.

The invention according to claim 2 is directed to the water treatment apparatus according to claim 1, wherein the above LF membrane is a hydrophobic polymer membrane that is not subjected to hydrophilicizing processing.

When the LF membrane is a polymer membrane (hydrophobic polymer membrane) made of a hydrophobic material such as a polytetrafluoroethylene (hereinafter referred to as PTFE) membrane, the compatibility with the liquid to be treated such as seawater becomes low and the treatment flow rate (flux) per unit membrane area becomes low. When the MF membrane or UF membrane is a hydrophobic polymer membrane such as a PTFE membrane, this problem is more prominent. Accordingly, a polymer membrane (hydrophilic polymer membrane) made of a hydrophilic material such as polyether sulfone (PES) and polysulfone (PS) is preferable to enhance the treatment flow rate (flux). However, even when the hydrophobic polymer membrane such as a PTFE membrane that is excellent in mechanical strength and chemical resistance is used, the treatment flow rate (flux) can be enhanced by a method for treating the LF membrane, MF membrane or UF membrane with a hydrophilic liquid or by hydrophilicizing processing for hydrophilicizing the material that configures the LF membrane, MF membrane or UF membrane. Accordingly, when the hydrophobic polymer membrane is used, performing this treatment or processing is preferable.

The method for treating the LF membrane, MF membrane or UF membrane with a hydrophilic liquid can include a method for bringing the LF membrane, MF membrane or UF membrane into contact with hydrophilic alcohol and covering a surface of the membrane (including the inside of the pores) with the hydrophilic alcohol before passing the liquid to be treated through the membrane. The hydrophilic alcohol can include ethanol, propanol and the like, and isopropanol, in particular, is preferably used. The method for bringing the LF membrane, MF membrane or UF membrane into contact with the hydrophilic alcohol can include a method for passing the hydrophilic alcohol through the LF membrane, MF membrane or UF membrane, a method for immersing the LF membrane, MF membrane or UF membrane in the hydrophilic alcohol, and the like. In addition, when the LF membrane, MF membrane or UF membrane is a PTFE membrane, the method of hydrophilicizing processing for hydrophilicizing the material that configures the membrane can include, for example, a method for bridging a surface of the PTFE membrane with a hydrophilicizing compound such as vinyl alcohol.

As described above, the hydrophilic polymer membrane or the hydrophobic polymer membrane that is subjected to hydrophilicizing processing is preferably used as the LF membrane, MF membrane or UF membrane to enhance the treatment flow rate (flux) per unit membrane area. On the other hand, the hydrophobic polymer membrane that is not subjected to hydrophilicizing processing is preferably used as the LF membrane to suppress a decrease over time in treatment flow rate (flux). Claim 2 corresponds to a preferable manner thereof.

The inventors of the present invention have found, as a result of their study, that when the hydrophobic polymer membrane that is not subjected to hydrophilicizing processing is used as the LF membrane, a decrease over time in treatment flow rate (flux) can be further suppressed. In other words, when the hydrophobic polymer membrane that is not subjected to hydrophilicizing processing is used as the LF membrane, a decrease over time in treatment flow rate (flux) during the filtration operation can be made smaller than a decrease over time in treatment flow rate (flux) during the filtration operation when the hydrophilic polymer membrane or the hydrophobic polymer membrane that is subjected to hydrophilicizing processing is used as the LF membrane, although the treatment flow rate (flux) at the start of filtration may decrease.

By providing the LF membrane at the former stage of the MF membrane or UF membrane, a decrease over time in treatment flow rate (flux) caused by clogging of the MF membrane or UF membrane can be suppressed. Depending on the type of the liquid to be treated, however, a decrease over time in treatment flow rate (flux) is not sufficiently prevented in some cases even when the LF membrane is provided. This problem appears, for example, when the liquid to be treated has high content of the organic particles such as TEP. Even in this case, when the hydrophobic polymer membrane that is not subjected to hydrophilicizing processing is used as the LF membrane, the effect of preventing a decrease over time in treatment flow rate (flux) caused by clogging of the MF membrane or UF membrane is significant and the effect of preventing a decrease over time is further enhanced. It is noted that the hydrophobic polymer membrane can include a polyvinylidene fluoride (PVdF) membrane, a polyethylene (PE) membrane and the like, in addition to the PTFE membrane.

The invention according to claim 3 is directed to the water treatment apparatus according to claim 1 or 2, wherein the above MF membrane or UF membrane is a hydrophilic polymer membrane or a hydrophobic polymer membrane that is subjected to hydrophilicizing processing. As described above, in order to enhance the treatment flow rate (flux), the polymer membrane (hydrophilic polymer membrane) made of a hydrophilic material is preferably used as the MF membrane or UF membrane, or the hydrophilicizing processing for hydrophilicizing the material that configures the MF membrane or UF membrane is preferably performed.

The invention according to claim 4 is directed to the water treatment apparatus according to any one of claims 1 to 3, wherein the LF membrane is a PTFE membrane.

The invention according to claim 5 is directed to the water treatment apparatus according to any one of claims 1 to 3, wherein the LF membrane is a polyvinylidene fluoride membrane or a polyethylene membrane.

The material of the LF membrane is not particularly limited if the material allows formation of uniform pores each having an average pore diameter of 1 μm or

more and has a mechanical strength sufficient enough to withstand applied pressure during filtration, backwash using a liquid passing through the membrane, and the like. The material preferably used can include PTFE, fluorine resin such as a polyvinylidene fluoride membrane, polyethylene, and the like. In particular, PTFE is excellent in mechanical strength, and in addition, allows easy formation at high porosity of uniform pores each having an average pore diameter in the range of 2 to 5 μm. Furthermore, PTFE is excellent in chemical resistance. Therefore, PTFE is used more preferably.

The invention according to claim 6 is directed to the water treatment apparatus according to any one of claims 1 to 5, wherein the LF membrane is a filtration membrane having an average pore diameter of 1 μm or more and less than 10 μm. Although the upper limit of the average pore diameter of the LF membrane is not particularly limited, the effect of removing the suspended substance and reducing the organic particles such as TEP is considered to become insufficient if the average pore diameter exceeds 10 μm. Therefore, the average pore diameter of less than 10 μm is preferable. Furthermore, the LF membrane that can be readily manufactured has an average pore diameter of approximately 5 μm or less. On the other hand, the LF membrane having an average pore diameter of 2 μm or more is preferable in order to obtain high treatment flow rate (flux) per unit membrane area. Thus, the LF membrane having an average pore diameter of 2 μm or more and 5 μm or less is more preferable.

The invention according to claim 7 is directed to a water treatment method, including: a rough filtration step for filtering raw water by an LF membrane (filtration membrane having an average pore diameter of 1 μm or more); a precise filtration step for filtering the water filtered in the rough filtration step, by an MF membrane or UF membrane; and a reverse osmosis membrane treatment step for treating the water filtered in the precise filtration step, by a reverse osmosis membrane. The invention according to claim 7 is obtained by interpreting the invention according to claim 1 from the method aspect. Filtration by the LF membrane (rough filtration step) and filtration by the MF membrane or UF membrane (precise filtration step) are as described above. In addition, the LF membrane, the MF membrane and the UF membrane used in this method are also as described above.

The invention according to claim 8 is directed to the water treatment method according to claim 7, wherein the LF membrane is a hydrophobic polymer membrane that is not subjected to hydrophilicizing processing. The invention according to claim 8 is obtained by interpreting the invention according to claim 2 from the method aspect. As described above, the hydrophobic polymer membrane that is not subjected to hydrophilicizing processing is preferably used as the LF membrane to suppress a decrease over time in treatment flow rate (flux).

ADVANTAGEOUS EFFECTS OF INVENTION

According to the present invention, the treatment flow rate (flux) per unit membrane area can be increased, and thus, a desired amount of treatment can be obtained with small facilities. In addition, large installation area is not required, and the installation area can be significantly decreased as compared with the installation area in the case of sand filtration. Furthermore, addition of the flocculant is not required. Therefore, the running cost of a water treatment system in which the water treatment apparatus and the water treatment method of the present invention are used can be lowered.

BRIEF DESCRIPTION OF DRAWINGS

Fig. 1 is a schematic diagram of one example of a water treatment apparatus of the present invention.
Fig. 2 is a schematic cross-sectional view of one example of first membrane filtration means in which an LF membrane used in the water treatment apparatus and a water treatment method of the present invention is used.
Fig. 3 is a graph showing the relationship among the filtration time, the filtration flux and the differential pressure in experimental data 1.
Fig. 4 is a graph showing the relationship among the filtration time, the filtration flux and the differential pressure in experimental data 1.
Fig. 5 is a graph showing the relationship between the filtration time and the filtration flux in experimental data 2.
Fig. 6 is a graph showing the relationship between the filtration time and the filtration flux in experimental data 3.
Fig. 7 is a graph showing the relationship between the filtration time and the filtration flux in experimental data 4.
Fig. 8 is a graph showing the relationship between the filtration time and the filtration flux in experimental data 5.
Fig. 9 is a graph showing the relationship between the total flow rate and the filtration flux in experimental data 5.
Fig. 10 is a graph showing the relationship between the filtration time and the filtration flux in experimental data 6.
Fig. 11 is a graph showing the relationship between the filtration time and the filtration flux in experimental data 7.

DESCRIPTION OF EMBODIMENTS

Next, a mode for carrying out the present invention will be described with reference to the drawings. The scope of the present invention, however, is not limited to this mode, and various modifications can be made within a range where the contents of the present invention are not lost.

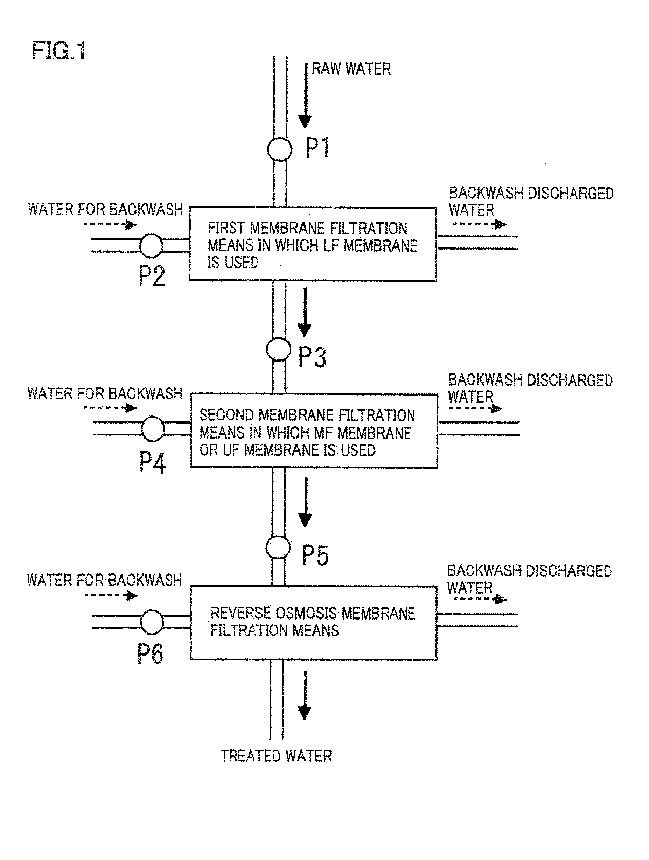

Fig. 1 is a schematic diagram of one example of a water treatment apparatus of the present invention. The apparatus shown in Fig. 1 corresponds to the water treatment apparatus according to claim 1.

First, as shown by a solid arrow in Fig. 1, raw water is injected by a pump P1 into first membrane filtration means in which an LF membrane is used, and passes through the LF membrane in the first membrane filtration means. As a result, relatively coarse particles in a suspended substance are removed and organic particles such as TEP are also captured. The step performed here corresponds to a rough filtration step in claim 7. The working pressure of the first membrane filtration means is normally set to 100 kPa or less.

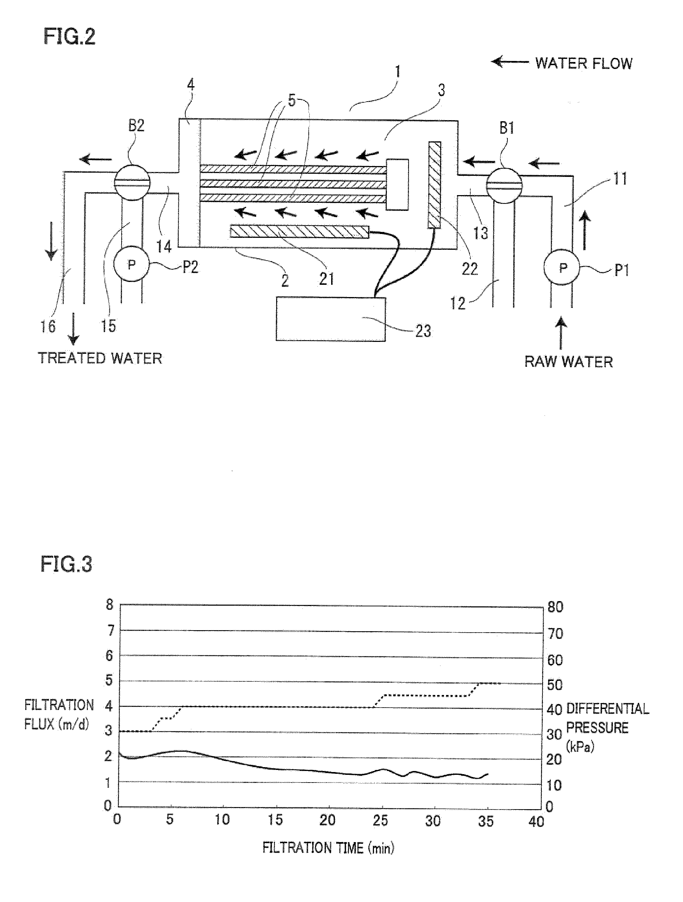

The structure of the first membrane filtration means is not particularly limited, and in order to enhance handling and physical durability of the membrane, for example, an element having a flat membrane structure in which a flat LF membrane is sandwiched between the frames can be used. In order to further increase the area of the filtration membrane in the same apparatus size, however, an element including a hollow fiber LF membrane is preferably used. Fig. 2 illustrates an example of an element in which a hollow fiber membrane is used.

A membrane preferably used as the LF membrane, that is, a membrane made of PTFE and including uniform pores each having a diameter in the range of 2 to 5 $\mu$m, can be manufactured, for example, by manufacturing PTFE powders by emulsion polymerization, mixing this PTFE powders with a part of PTFE powders obtained by suspension polymerization, shaping this powder mixture into a membrane, heating and melting the powder mixture, and then, drawing the obtained membrane. When the PTFE powders obtained by suspension polymerization is not mixed, it is difficult to manufacture a membrane having an average pore diameter in the range of 2 to 5 $\mu$m and having excellent mechanical strength by drawing. The mixing ratio of the PTFE powders obtained by suspension polymerization is appropriately adjusted in consideration of the desired average pore diameter and the mechanical strength.

In order to provide the mechanical strength, a composite membrane obtained by combining the above porous membrane having an average pore diameter of 1 $\mu$m or more and a porous body having larger pores can also be used as the LF membrane. In addition, a rubbery polymer such as polybutadiene, ethylene-propylene rubber and neoprene rubber can be used as the material of this porous body.

It is noted that during use of the filtration membrane such as the LF membrane, a suspended substance enters and clogs the pores, which causes a decrease in filtration flow rate and an increase in filtration pressure. Therefore, it is required to clean the membrane at appropriate times to clean and remove the suspended substance that clogs the pores. Accordingly, the first membrane filtration means in which the LF membrane is used preferably includes means for cleaning and removing the suspended substance that clogs the pores by passing the raw water through the membrane.

As a method for cleaning the filtration membrane, a cleaning method by passing gas through the filtration membrane in the direction opposite to the liquid flow during filtration (air backwash), a cleaning method by backwash in which water is passed through the filtration membrane in the direction opposite to the liquid flow during filtration (hereinafter referred to as "backwash using a liquid passing through a membrane"), a method for cleaning the membrane by injecting a chemical solution (chemical solution cleaning), a cleaning method by applying an ultrasonic wave to the membrane (ultrasonic cleaning), and the like are known.

Chemical solution cleaning has problems such as long time required for cleaning, the need for waste liquid treatment, and the need for the cost of the chemical solution. Chemical solution cleaning also has a safety problem depending on the type of the chemical solution. Therefore, a cleaning method without using the chemical solution is desired. Backwash using a liquid passing through a membrane does not have such problems and is excellent in cleaning efficiency. Therefore, backwash using a liquid passing through a membrane is widely employed. Since the LF membrane has an average pore diameter of 1 μm or more, the LF membrane has a feature of easily cleaning and removing the suspended substance that adheres to the membrane surface or enters and clogs the pores of the membrane, by backwash using a liquid passing through a membrane.

This feature of easy cleaning is prominent particularly when backwash using a liquid passing through a membrane is combined with ultrasonic cleaning. In other words, by performing backwash using a liquid passing through a membrane and ultrasonic cleaning on the LF membrane at the same time, clogging of the pores can be sufficiently removed, which allows recovery of the filtration flow rate to the same level as the level at the start of the filtration step. This cleaning is performed specifically by bringing the LF membrane into contact with the liquid used for cleaning (normally, water that does not include a suspended substance), applying a differential pressure to the above liquid to generate the flow in the direction opposite to the flow during filtration, and at the same time, applying an ultrasonic wave to the LF membrane through the liquid that is in contact with the above LF membrane.

The first membrane filtration means in the example of Fig. 1 is provided with means for cleaning the LF membrane by backwash using a liquid passing through a membrane. In other words, as shown by a broken arrow in Fig. 1, water for backwash is injected by a pump P2 into the first membrane filtration means in which the LF membrane is used, and passes through the LF membrane in the first membrane filtration means in the direction opposite to the direction during filtration. As a result, the suspended substance that clogs the pores of the LF membrane is cleaned and removed. Water that does not include a suspended substance is preferably used as the water for backwash.

As described above, by combining backwash using a liquid passing through a membrane with ultrasonic cleaning, the effect of easy cleaning becomes particularly prominent. As a result, sufficient cleaning is possible, chemical cleaning can be eliminated, or the load caused by chemical cleaning can be reduced. Therefore, preferably, ultrasonic oscillation means is provided in the first membrane filtration means and an ultrasonic wave is applied concurrently with backwash using a liquid passing through a membrane.

After backwashing, the water including the suspended substance that has passed through the LF membrane is discharged as backwash discharged water as shown by the broken arrow in the figure.

As shown by the solid arrow in the figure, the water that has flown out of the first membrane filtration means is injected by a pump P3 into second membrane filtration means in which an MF membrane or UF membrane is used, and passes through the MF membrane or UF membrane in the second membrane filtration means. As a result, fine particles in the suspended substance are removed. The step performed here corresponds to a precise filtration step in claim 7.

The second membrane filtration means is normally configured by a membrane element in which the MF membrane or UF membrane is used, a pressure-resistant container and the like. Provision of the second membrane filtration means allows sufficient removal of the suspended substance and the organic particles such as TEP by pretreatment, even without the use of a flocculant.

In many cases, the MF membrane is operated at a working pressure of 200 kPa or less, and the UF membrane is operated at a working pressure of 300 kPa or less.

Although not particularly limited, the MF membrane or UF membrane includes a polyacrylonitrile porous membrane, a polyimide porous membrane, a PES porous membrane, a polyphenylene sulfide sulfone porous membrane, a PTFE porous membrane, a PVdF porous membrane, a polypropylene porous membrane, a polyethylene porous membrane, and the like. In particular, the PTFE porous membrane is excellent in mechanical strength, chemical resistance and the like, and thus, the PTFE porous membrane is preferable. The PTFE porous membrane can also be used as a composite membrane similarly to the above LF membrane.

As shown by the solid arrow in the figure, the water that has flown out of the second membrane filtration means is injected by a pump P5 into reverse osmosis membrane filtration means, and passes through a reverse osmosis membrane. As a result, dissolved salts and the like are removed. The step performed here corresponds to a reverse osmosis membrane filtration step in claim 7.

The reverse osmosis membrane filtration means is normally configured by a reverse osmosis membrane element, a pressure-resistant container and the like. The working pressure of the reverse osmosis membrane filtration means is normally in the range of 0.1 to 15 MPa, and is appropriately selected depending on the type and the like of the liquid to be treated. In the case of seawater desalination or when industrial wastewater and the like are used as raw water, the reverse osmosis membrane filtration means is used at a relatively high pressure. A polymer material such as acetylcellulose-based polymer, polyamide, polyester, polyimide, and vinyl polymer is typically used as the material of the reverse osmosis membrane. In addition, as for the structure of the reverse osmosis membrane, an asymmetric membrane having a dense layer at least on one side of the membrane and including fine pores having a pore diameter which gradually increases from the dense layer to the inside of the membrane or to the other side surface, and other composite membranes can be used.

As shown by the solid arrow in the figure, the water that has flown out of the reverse osmosis membrane filtration means is obtained as the treated liquid that does not include the suspended substance and impurities such as salt, and is used for various applications.

In the example of Fig. 1, both of the second membrane filtration means and the reverse osmosis membrane filtration means have means for cleaning the membrane similarly to the first membrane filtration means. In other words, as shown by the broken arrow in Fig. 1, the water for backwash is injected by a pump P4 in the second membrane filtration means or by a pump P6 in the reverse osmosis membrane filtration means, and passes through the membrane in the direction opposite to the direction during filtration, thereby cleaning the membrane (backwash using a liquid passing through a membrane). After backwashing, the water is discharged as the backwash discharged water as shown by the broken arrow in the figure. In both of the second membrane filtration means and the reverse osmosis membrane filtration means as well, provision of the ultrasonic oscillation means and application of an ultrasonic wave concurrently with backwash using a liquid passing through a membrane allow more sufficient cleaning. As a result, chemical cleaning can be eliminated or the load caused by chemical cleaning can be reduced.

Similarly to the LF membrane, a hollow fiber membrane, a flat membrane and the like can be used as any of the MF membrane or UF membrane in the second membrane filtration means and the reverse osmosis membrane in the reverse osmosis membrane filtration means.

In any of the first membrane filtration means, the second membrane filtration means and the reverse osmosis membrane filtration means, a plurality of membrane modules each including the membrane element may be normally provided in parallel in order to obtain large treatment flow rate. In addition, the plurality of membrane modules may be provided in series in order to remove the suspended substance, salts and the like more completely.

Fig. 2 is a schematic cross-sectional view schematically illustrating the first membrane filtration means in which the LF membrane in the example of Fig. 1 is used. In the figure, the first membrane filtration means includes a hollow fiber membrane module 1 in which the LF membrane is used, a housing 2 of hollow fiber membrane module 1, a raw water side 3 and a filtered water extracting portion 4 located within hollow fiber membrane module 1, and a hollow fiber membrane 5 formed of the LF membrane. (Although only three hollow fiber membranes 5 are shown in the figure, much more hollow fiber membranes are normally provided in the hollow fiber membrane module.)

P1 and P2 (corresponding to P1 and P2 in Fig. 1, respectively) represent a pump, and B 1 and B2 represent a valve. Furthermore, ultrasonic vibrators 21 and 22 serving as means for applying an ultrasonic wave are provided within hollow fiber membrane module 1, and are connected to an ultrasonic oscillator 23 external to hollow fiber membrane module 1. An ultrasonic wave is applied to the liquid in which the LF membrane is immersed, and is applied to the LF membrane through this liquid. Thus, ultrasonic vibrators 21 and 22 are provided within hollow fiber membrane module 1 that is filled with this liquid. It is noted that although two ultrasonic vibrators 21 and 22 placed in different directions are provided in the example of Fig. 2, one of two ultrasonic vibrators 21 and 22 may be placed. A bold arrow in Fig. 2 represents the water flow when the LF membrane removes the suspended substance in the raw water and captures the organic particles such as TEP.

First, a pressure is applied to the raw water by pump P1, and the pressurized raw water is fed through a pipe 11, valve B1 and a pipe 13 to raw water side 3 of hollow fiber membrane module 1. At this time, ultrasonic vibrators 21 and 22 are not in operation.

The raw water fed to raw water side 3 is under pressure by pump P1, and thus, the raw water passes through hollow fiber membrane 5 (the LF membrane) due to the differential pressure as shown by the bold arrow in Fig. 2. When the raw water passes through hollow fiber membrane 5, hollow fiber membrane 5 traps and removes a relatively coarse suspended substance in the raw water. In addition, hollow fiber membrane 5 also captures the organic particles such as TEP in the raw water and the content of the organic particles is reduced. The filtered water that has passed through hollow fiber membrane 5 flows through a hollow portion in hollow fiber membrane 5, filtered water extracting portion 4, a pipe 14, valve B2, and a pipe 16, and flows out as the treated liquid whose relatively coarse suspended substance has been removed and content of the organic particles such as TEP has been reduced. As shown in Fig. 1, the treated liquid that has flown out is injected by pump P3 into the second membrane filtration means.

In the case of cleaning the LF membrane by backwash using a liquid passing through a membrane, and the like, the orientation of valves B 1 and B2 is changed, pump P2 is operated instead of pump P1, a pressure is applied to the water for backwash by pump P2, and the pressurized water for backwash is fed through a pipe 15, valve B2, pipe 14, and filtered water extracting portion 4 of hollow fiber membrane module 1 to the hollow portion in hollow fiber membrane 5. Since this water for backwash is under pressure, the water for backwash passes from filtered water extracting portion 4 through hollow fiber membrane 5 to raw water side 3. At this time, the suspended substance that clogs the pores of hollow fiber membrane 5 is washed out.

Furthermore, concurrently with this washout, ultrasonic oscillator 23 as well as ultrasonic vibrators 21 and 22 are operated and an ultrasonic wave is applied to hollow fiber membrane 5. As a result, the suspended substance that clogs the pores of hollow fiber membrane 5 can be washed out more sufficiently, and by brief cleaning, the inside of the pores of hollow fiber membrane 5 can achieve a condition similar to a condition at the start of filtration (little clogging).

The cleaning water (also including the suspended substance that has clogged the pores) that has passed through hollow fiber membrane 5 passes through raw water side 3 of hollow fiber membrane module 1 and pipe 13. Furthermore, since the orientation of valve B 1 has been changed, the cleaning water passes through valve B 1 and a pipe 12 and is discharged as the backwash discharged water.

Although the first membrane filtration means in which the LF membrane is used has been described above, the flow of the liquid to be treated and the water for backwash in the second membrane filtration means and the reverse osmosis membrane filtration means is similar to the flow in the first membrane filtration means.

Example

Experimental Data 1

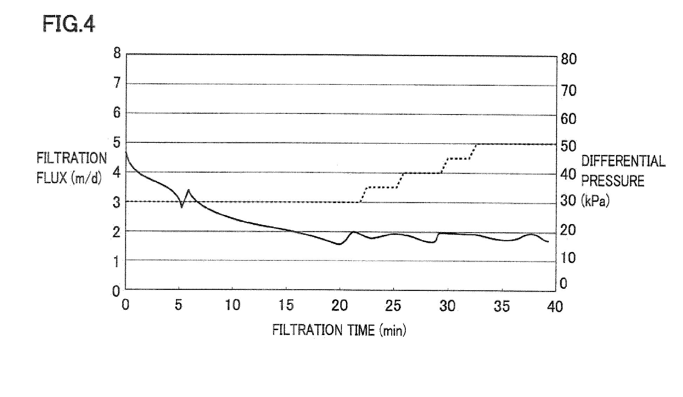

Fig. 3 is a graph showing the relationship between the filtration time and the filtration flux (shown by a solid line in Fig. 3) as well as the relationship between the filtration time and the differential pressure (shown by a broken line in Fig. 3) when a UF membrane (which is a PTFE membrane that is not subjected to hydrophilicizing processing, although this PTFE membrane is subjected to treatment with isopropanol. The PTFE membrane that is not subjected to hydrophilicizing processing will be referred to as "hydrophobic PTFE membrane" hereinafter.) having a membrane area of 36 m$^2$ and an average pore diameter of 0.1 $\mu$m (100 nm) filters seawater having a turbidity of 0.1 NTU. The working pressure is 50 kPa. Fig. 4 illustrates the relationship between the filtration time and the filtration flux (shown by a solid line in Fig. 4) as well as the relationship between the filtration time and the differential pressure (shown by a broken line in Fig. 4) when an LF membrane (which is a hydrophobic PTFE membrane and is subjected to treatment with isopropanol) having a membrane area of 7 m$^2$ and an average pore diameter of 2 $\mu$m filters seawater first, and the UF membrane same as the above-described UF membrane and having a membrane area of 36 m$^2$ and an average pore diameter of 0.1 $\mu$m (100 nm) filters the flown out water. The working pressure is 50 kPa. It is noted that the unit NTU (Nephelometric Turbidity Unit) represents the Formazin Turbidity that is a unit of measure when formazin is used as a standard solution to measure scattered light. A solution obtained by dissolving a milligram of formazin in a liter of purified water has 1 NTU. It is noted that processing of passing isopropanol through a filtration membrane is performed before filtration of the seawater. The same is also applied to the experiments that will be described below.

Comparing Figs. 3 and 4, the filtration flux becomes stable for the filtration time of approximately 30 minutes in both cases. Comparing Figs. 3 and 4 in terms of the filtration flux when the filtration flux becomes stable, however, the filtration flux obtained in Fig. 4 is 1.6 times larger than the filtration flux obtained in Fig. 3. In other words, in Fig. 4, only about 60% of the membrane area in Fig. 3 is required to achieve the same amount of treatment. Although the LF membrane is required in Fig. 4, only about 70% of the membrane area in Fig. 3 is required even in consideration of the membrane area of the LF membrane. According to this result, when the pretreatment is a two-stage treatment by using the LF membrane and the UF membrane, the membrane area can be decreased by approximately 30%, as compared with the case where the pretreatment is performed by using only the UF membrane. Therefore, the installation area and the installation cost of facilities can be reduced.

It is noted that when sand filtration is performed in the pretreatment, an extensive filter bed is required (for example, the facilities described in Non-Patent Literature 1 have the capability of desalinating 50,000 tons per day of seawater having a turbidity of 0.1 NTU, while the area of the filter bed required for sand filtration in the pretreatment exceeds 10,000 m$^2$). Accordingly, it is clear that the installation area of the facilities in Fig. 4 is much smaller than the installation area when sand filtration is performed in the pretreatment.

Experimental Data 2

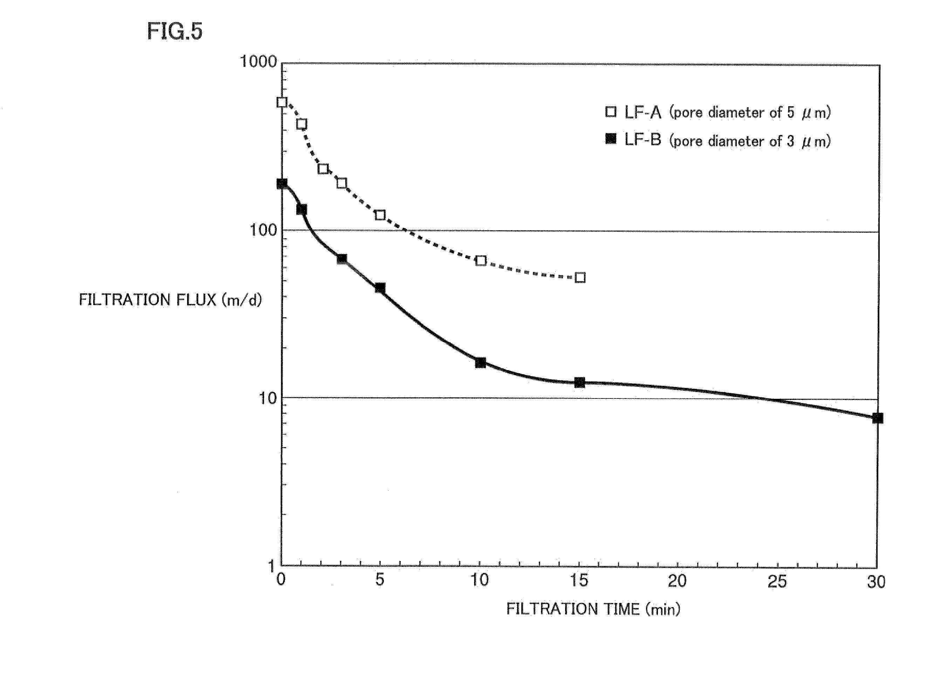

Fig. 5 is a graph showing the relationship between the filtration time and the filtration flux when an LF membrane (LF-A) having an average pore diameter of 5 $\mu$m and an LF membrane (LF-B) having an average pore diameter of 3 $\mu$m (both have a membrane thickness of 50 $\mu$m, both are hydrophobic PTFE membranes and are subjected to treatment with isopropanol) are used to filter, at a working pressure of 50 kPa, pure water to which 50 ppm of starch particles are added. The filtration flux decreases with the filtration time in both cases, while the filtration flux exceeding 10 m/d is obtained even at the filtration time of approximately 15 minutes. This experimental result shows that in the LF membrane having an average pore diameter of 3 μm and the LF membrane having an average pore diameter of 5 μm as well, high treatment flow rate (flux) per unit membrane area is obtained as in the above LF membrane having an average pore diameter of 2 μm, and these LF membranes can be used in the pretreatment of reverse osmosis membrane filtration.

Experimental Data 3

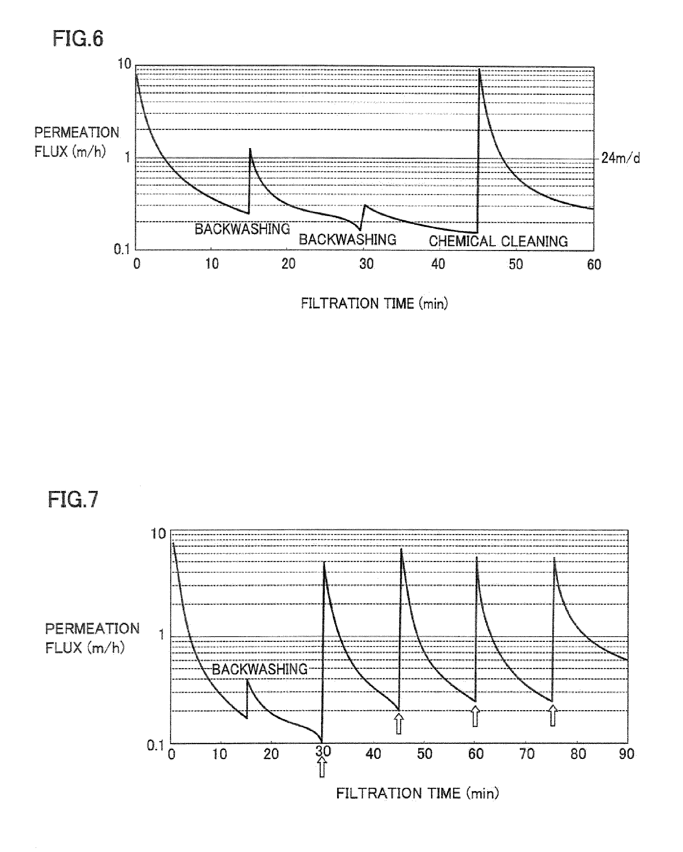

Fig. 6 is a graph showing the relationship between the filtration time and the filtration flux when an LF membrane (which is a hydrophobic PTFE membrane and is subjected to treatment with isopropanol) having an average pore diameter of 2 μm and having an outer diameter of 2.3 mm, an inner diameter of 1.1 mm and a length of 20 cm is used to filter, at a working pressure of 50 kPa, pure water to which 50 ppm of silica particles having an average particle size of 12 μm are added. Backwash using water passing through the membrane is performed at the filtration time of 15 minutes and 30 minutes, and chemical solution cleaning is performed at the filtration time of 45 minutes. The conditions for the backwash using water passing through the membrane and the chemical solution cleaning are as follows:

backwash using water passing through the membrane: 90 kPa, one minute chemical solution cleaning: NaOH (1%) + NaClO (200 ppm), one hour Experimental Data 4

Fig. 7 is a graph showing the relationship between the filtration time and the filtration flux when filtration is performed under the same conditions as those in Experimental Data 3, backwash using a liquid passing through a membrane is performed at the filtration time of 15 minutes under the same conditions as those in Experimental Data 3, and further, backwash using a liquid passing through a membrane under the same conditions as those in Experimental Data 3 and application of an ultrasonic wave are performed at the same time at the filtration time of 30 minutes, 45 minutes, 60 minutes, and 75 minutes (shown by a hollow arrow in Fig. 7). The conditions for the application of an ultrasonic wave are 50 kHz, 100 W and 30 seconds.

As is clear from Figs. 6 and 7, the filtration flux can be recovered by the backwash using a liquid passing through a membrane. By performing the backwash using a liquid passing through a membrane and the application of an ultrasonic wave at the same time to clean the LF membrane, however, the filtration flux can be recovered to the level equal to the level at the start of filtration.

Experimental Data 5

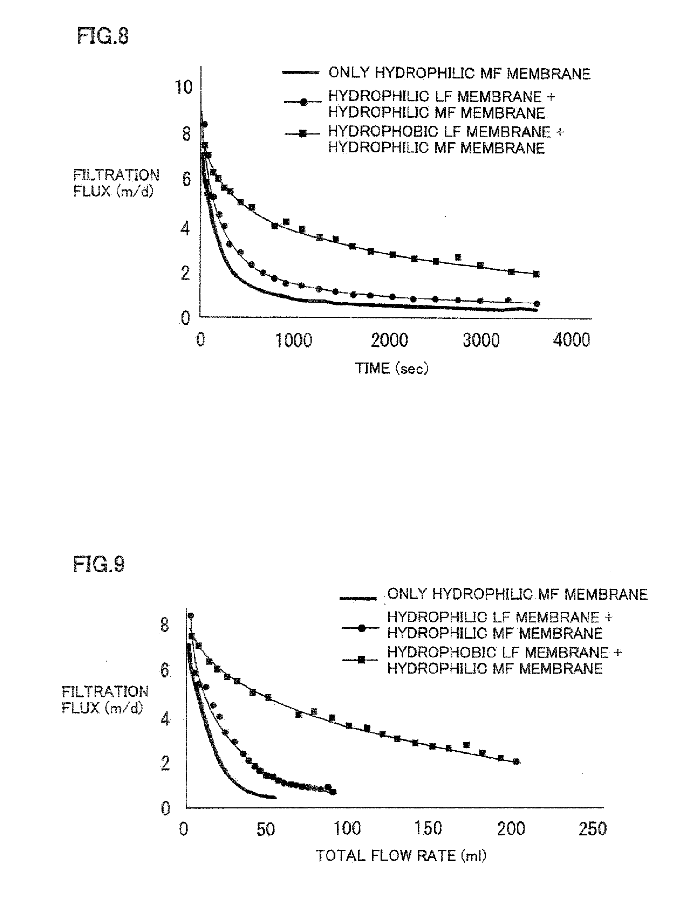

Maishima Seawater (seawater obtained at Osaka port in Osaka prefecture: seawater including 2 ppm of plankton, 4 ppm of TEP, 1 ppm of organic suspended substance, and 3 ppm of inorganic suspended substance is assumed as average water to be treated) was filtered at a working pressure of 50 kPa by using a filtration system 1, 2 or 3 that will be described below. Fig. 8 is a graph showing the relationship between the filtration time and the filtration flux at this time, and Fig. 9 is a graph showing the relationship between the total filtration flow rate and the filtration flux.

filtration system 1: filtration by using only a hydrophilic MF membrane (without pretreatment by an LF membrane)

filtration system 2: filtration by using a hydrophobic LF membrane, and then, filtration by using the hydrophilic MF membrane

filtration system 3: filtration by using a hydrophilic LF membrane, and then, filtration by using the hydrophilic MF membrane

It is noted that the shape, configuration and material of the LF membrane and the MF membrane used in the filtration systems 1 to 3 are as follows:

- hydrophobic LF membrane: (POREFLON TB-2311200: trade name)
  hollow fiber membrane having an average pore diameter of 2.0 μm and having an outer diameter of 2.3 mm, an inner diameter of 1.1 mm and a length of 20 cm
  material: hydrophobic PTFE membrane (that is not subjected to hydrophilicizing processing)
- hydrophilic LF membrane: (POREFLON WTB-2311200: trade name)
  hollow fiber membrane having an average pore diameter of 2.0 μm and having an outer diameter of 2.3 mm, an inner diameter of 1.1 mm and a length of 20 cm
  material: hydrophilic PTFE membrane (obtained by bridging the surface of the PTFE membrane with vinyl alcohol)
- hydrophilic MF membrane: (POREFLON WTB-2311/005: trade name)
  hollow fiber membrane having an average pore diameter of 0.1 μm and having an outer diameter of 2.3 mm, an inner diameter of 1.1 mm and a length of 20 cm
  material: hydrophilic PTFE membrane (obtained by bridging the surface of the PTFE membrane with vinyl alcohol)

The following facts are clear from Figs. 8 and 9.

1) When the treatment is performed by using only the hydrophilic MF membrane without the pretreatment by the LF membrane, the treatment flow rate (flux) significantly decreases over time. This is probably because the suspended substance and the organic particles such as TEP in the liquid to be treated clog the MF membrane.

2) When the pretreatment by the hydrophobic LF membrane is performed, and then, the treatment is performed by using the hydrophilic MF membrane, a decrease over time in treatment flow rate (flux) is significantly smaller than a decrease over time in treatment flow rate (flux) when the treatment is performed by using only the hydrophilic MF membrane or when the pretreatment by the hydrophilic LF membrane is performed, and then, the treatment is performed by using the hydrophilic MF membrane. This system allows continuous filtration for a long time period. This is probably because the hydrophobic LF membrane efficiently captures the organic particles such as TEP in the liquid to be treated, and clogging of the MF membrane caused by the organic particles such as TEP that have flown out of the LF membrane is reduced.

3) When the pretreatment by the hydrophilic LF membrane is performed, and then, the treatment is performed by using the hydrophilic MF membrane, a decrease over time in treatment flow rate (flux) is suppressed, as compared with a decrease over time in treatment flow rate (flux) when the treatment is performed by using only the hydrophilic MF membrane. The decrease, however, is quite larger than the decrease when the pretreatment by the hydrophobic LF membrane is performed, and then, the treatment is performed by using the hydrophilic MF membrane. This is probably because capture of the organic particles such as TEP in the liquid to be treated by the hydrophilic LF membrane is smaller than capture of the organic particles such as TEP by the hydrophobic LF membrane, and clogging of the MF membrane caused by the organic particles such as TEP is relatively large.

Experimental Data 6 (Reference Example)

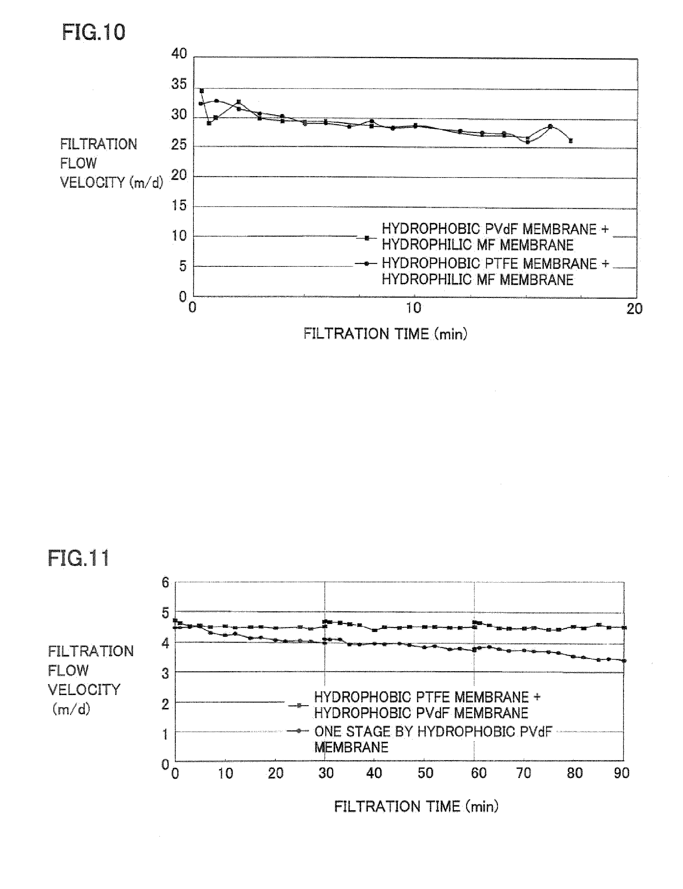

Maishima Seawater (seawater obtained at Osaka port in Osaka prefecture) was filtered at a working pressure of 50 kPa by using a filtration system 4 or 5 that will be described below. Fig. 10 is a graph showing the relationship between the filtration time and the filtration flux at this time.

filtration system 4: filtration by using a hydrophobic PVdF membrane, and then, filtration by using the hydrophilic MF membrane

filtration system 5: filtration by using a hydrophobic PTFE membrane, and then, filtration by using the hydrophilic MF membrane

It is noted that the hydrophobic PVdF membrane, the hydrophobic PTFE membrane and the hydrophilic MF membrane used in the filtration systems 4 and 5 are as follows:

- hydrophobic PVdF membrane: PVdF membrane that has a nominal pore diameter of 0.05 $\mu$m and is not subjected to hydrophilicizing processing (use a module made by Toray Industries, Inc: Torayfil HFS-1010)

- hydrophobic PTFE membrane:

    hollow fiber membrane having a nominal pore diameter of 0.1 $\mu$m and having an outer diameter of 2.3 mm, an inner diameter of 1.1 mm and a length of 20 cm
    material: PTFE membrane that is not subjected to hydrophilicizing processing

- hydrophilic MF membrane (POREFLON WTB-2311/005: trade name)
    hollow fiber membrane having a nominal pore diameter of 0.1 $\mu$m and having an outer diameter of 2.3 mm, an inner diameter of 1.1 mm and a length of 20 cm
    material: hydrophilic PTFE membrane (obtained by bridging the surface of the PTFE membrane with vinyl alcohol)

Both of the filtration system 4 and the filtration system 5 are two-stage water treatment systems, and the filtration system 4 is the same as the filtration system 5 in that filtration by using the hydrophilic MF membrane is performed at the second stage. The filtration system 4 is, however, different from the filtration system 5 in that the filtration membrane used at the first stage is the hydrophobic PVdF membrane in the filtration system 4, whereas the filtration membrane used at the first stage is the hydrophobic PTFE membrane in the filtration system 5. As shown in Fig. 10, however, almost equal filtration flow velocity is obtained and the degree of decrease over time in filtration flow velocity is also equal in the filtration system 4 and the filtration system 5.

The excellent effects when the hydrophobic PTFE membrane (that is not subjected to hydrophilicizing processing) is used at the first stage of the multistage water treatment system are described in the above Experimental Data 5 and the like. The result in Fig. 10, however, shows that similar excellent effects are also obtained when other hydrophobic filtration membrane such as the hydrophobic PVdF membrane is used instead of the hydrophobic PTFE membrane.

Experimental Data 7

Shimizu seawater (seawater obtained at Shimizu port in Shizuoka prefecture) was filtered at a working pressure of 50 kPa by using a filtration system 6 or 7 that will be described below. Fig. 11 is a graph showing the relationship between the filtration time and the filtration flux at this time.

filtration system 6: filtration by using the hydrophobic LF membrane, and then, filtration by using the hydrophobic PVdF membrane

filtration system 7: filtration by using the hydrophobic PVdF membrane

It is noted that the hydrophobic LF membrane used in the filtration system 6 is the same as the hydrophobic LF membrane (POREFLON TB-2311200: trade name) used in Experimental Data 5, and the hydrophobic PVdF membrane used in the filtration systems 6 and 7 is the same as the hydrophobic PVdF membrane used in Experimental Data 6.

The filtration system 6 is the same as the filtration system 7 in that the hydrophobic PVdF membrane is used in both cases. The filtration system 6 is, however, different from the filtration system 7 in that filtration by using the hydrophobic LF membrane (hydrophobic PTFE membrane) is performed at the former stage in the filtration system 6, whereas one-stage treatment by using the hydrophobic PVdF membrane is performed without the treatment at the former stage in the filtration system 7. As shown in Fig. 11, almost equal filtration flow velocity is obtained in the filtration system 6 and the filtration system 7 at the start of the passage of the liquid through the membrane. However, a decrease over time in filtration flow velocity in the filtration system 6 where the treatment by using the hydrophobic PTFE membrane is performed at the former stage is smaller than a decrease over time in filtration flow velocity in the filtration system 7 where the treatment is not performed at the former stage. In other words, the treatment at the former stage by using the hydrophobic PTFE membrane allows suppression of a decrease over time in filtration flow velocity.

Experimental Data 5 (comparison between the filtration system 2 and the filtration system 1) also shows that the treatment at the former stage by using the hydrophobic PTFE membrane allows suppression of a decrease over time in filtration flow velocity. In the filtration system 2 in Experimental Data 5, however, filtration by using the hydrophilic membrane is performed at the second stage. On the other hand, in the present experiment, filtration by using the hydrophobic membrane is performed at the second stage. In other words, the present experiment shows that the effect of suppressing a decrease over time in filtration flow velocity can be achieved even when the hydrophobic filtration membrane is used at not only the first stage but also the second stage.

REFERENCE SIGNS LIST

1 hollow fiber membrane module; 2 housing; 3 raw water side; 4 filtered water extracting portion; 5 hollow fiber membrane; 11, 12, 13, 14, 15, 16 pipe; 21, 22 ultrasonic vibrator; 23 ultrasonic oscillator; P1, P2, P3, P4, P5, P6 pump; B1, B2 valve

**Claims**

1. A water treatment apparatus, comprising:

   first membrane filtration means in which a filtration membrane having an average pore diameter of 1 μm or more is used;
   second membrane filtration means for treating water filtered by the first membrane filtration means, by using a microfiltration membrane or ultrafiltration membrane; and
   reverse osmosis membrane filtration means for treating water filtered by the second membrane filtration means.

2. The water treatment apparatus according to claim 1, wherein
   said filtration membrane having an average pore diameter of 1 μm or more is a hydrophobic polymer membrane that is not subjected to hydrophilicizing processing.

3. The water treatment apparatus according to claim 1 or 2, wherein
   said microfiltration membrane or ultrafiltration membrane is a hydrophilic polymer membrane or a hydrophobic polymer membrane that is subjected to hydrophilicizing processing.

4. The water treatment apparatus according to any one of claims 1 to 3, wherein
   said filtration membrane having an average pore diameter of 1 μm or more is a polytetrafluoroethylene membrane.

5. The water treatment apparatus according to any one of claims 1 to 3, wherein
   said filtration membrane having an average pore diameter of 1 μm or more is a polyvinylidene fluoride membrane or a polyethylene membrane.

6. The water treatment apparatus according to any one of claims 1 to 5, wherein
   said filtration membrane having an average pore diameter of 1 μm or more is a filtration membrane having an average pore diameter of 1 μm or more and less than 10 μm.

7. A water treatment method, comprising:

   a rough filtration step for filtering raw water by a filtration membrane having an average pore diameter of 1 μm or more;
   a precise filtration step for filtering the water filtered in the rough filtration step, by a microfiltration membrane or ultrafiltration membrane; and
   a reverse osmosis membrane treatment step for treating the water filtered in the precise filtration step, by a reverse osmosis membrane.

8. The water treatment method according to claim 7, wherein

said filtration membrane having an average pore diameter of 1 $\mu$m or more is a hydrophobic polymer membrane that is not subjected to hydrophilicizing processing.

FIG.1

RAW WATER

P1

WATER FOR BACKWASH

BACKWASH DISCHARGED
WATER

FIRST MEMBRANE FILTRATION
MEANS IN WHICH LF MEMBRANE
IS USED

P2

P3

WATER FOR BACKWASH

BACKWASH DISCHARGED
WATER

SECOND MEMBRANE FILTRATION
MEANS IN WHICH MF MEMBRANE
OR UF MEMBRANE IS USED

P4

P5

WATER FOR BACKWASH

BACKWASH DISCHARGED
WATER

REVERSE OSMOSIS MEMBRANE
FILTRATION MEANS

P6

TREATED WATER

FIG.2

← WATER FLOW

TREATED WATER

RAW WATER

FIG.3

FILTRATION FLUX (m/d)

DIFFERENTIAL PRESSURE (kPa)

FILTRATION TIME (min)

FIG.4

FIG.5

EP 2 463 241 A1

FIG.6

FIG.7

## FIG.8

ONLY HYDROPHILIC MF MEMBRANE
● HYDROPHILIC LF MEMBRANE + HYDROPHILIC MF MEMBRANE
■ HYDROPHOBIC LF MEMBRANE + HYDROPHILIC MF MEMBRANE

FILTRATION FLUX (m/d)

TIME (sec)

## FIG.9

ONLY HYDROPHILIC MF MEMBRANE
● HYDROPHILIC LF MEMBRANE + HYDROPHILIC MF MEMBRANE
■ HYDROPHOBIC LF MEMBRANE + HYDROPHILIC MF MEMBRANE

FILTRATION FLUX (m/d)

TOTAL FLOW RATE (ml)

## FIG.10

## FIG.11

## INTERNATIONAL SEARCH REPORT

| | International application No. |
|---|---|
| | PCT/JP2010/063003 |

### A. CLASSIFICATION OF SUBJECT MATTER

*C02F1/44*(2006.01)i, *B01D29/01*(2006.01)i, *B01D29/11*(2006.01)i, *B01D29/50*(2006.01)i, *B01D29/66*(2006.01)i, *B01D61/04*(2006.01)i, *B01D61/08*(2006.01)i, *B01D61/18*(2006.01)i, *B01D61/58*(2006.01)i, *B01D71/36*(2006.01)i

According to International Patent Classification (IPC) or to both national classification and IPC

### B. FIELDS SEARCHED

Minimum documentation searched (classification system followed by classification symbols)
C02F1/44, B01D29/01, B01D29/11, B01D29/50, B01D29/66, B01D61/04, B01D61/08, B01D61/18, B01D61/58, B01D71/36

Documentation searched other than minimum documentation to the extent that such documents are included in the fields searched

| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 8-173961 A (Hitachi Metals, Ltd.), 09 July 1996 (09.07.1996), claim 1; fig. 1 (Family: none) | 1-8 |
| X | JP 2000-271460 A (Nitto Denko Corp.), 03 October 2000 (03.10.2000), claims; paragraphs [0002], [0065], [0066]; fig. 14, 16 <br> & JP 2000-271454 A     & JP 2000-271455 A <br> & JP 2000-271456 A     & JP 2000-271457 A <br> & JP 2000-271458 A     & JP 2000-271459 A <br> & JP 2000-271461 A     & US 6402956 B1 <br> & US 6432310 B1     & US 6533937 B1 <br> & EP 1022051 A2     & EP 1022050 A2 <br> & EP 1022052 A2 | 1-8 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 October, 2010 (26.10.10) | 09 November, 2010 (09.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="3"><strong>INTERNATIONAL SEARCH REPORT</strong></td><td>International application No.<br>PCT/JP2010/063003</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2002-306930 A  (Toray Industries, Inc.),<br>22 October 2002 (22.10.2002),<br>claims; paragraphs [0038], [0040], [0050];<br>fig. 5<br>(Family: none) | 1-8 |
| X | JP 2003-170165 A  (Toray Industries, Inc.),<br>17 June 2003 (17.06.2003),<br>claims; paragraphs [0016], [0022]; example 2<br>(Family: none) | 1-8 |
| X | JP 2003-245666 A  (Kobe Steel, Ltd.),<br>02 September 2003 (02.09.2003),<br>claim 3; example 2; fig. 2<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Mechanism of Desalination,* 17 July 2009, http://www.f suiki.or.jp/seawater/facilities/mechanism.php